(19) Europäisches Patentamt / European Patent Office / Office européen des brevets

(11) **EP 3 547 022 B1**

(12) **EUROPEAN PATENT SPECIFICATION**

(45) Date of publication and mention
of the grant of the patent:
**21.12.2022 Bulletin 2022/51**

(21) Application number: **17874516.2**

(22) Date of filing: **17.10.2017**

(51) International Patent Classification (IPC):
**G03B 15/00** (2021.01)    **G02B 13/00** (2006.01)
**G03B 11/00** (2021.01)    **H04N 5/225** (2006.01)
**H04N 5/33** (2006.01)    **H04N 5/369** (2011.01)
**G01J 3/28** (2006.01)

(52) Cooperative Patent Classification (CPC):
**G03B 11/00; G03B 19/023; G03B 33/00;
H04N 5/332; H04N 5/3696;** G02B 5/04; G02B 5/20;
G02B 13/00; G02B 27/126

(86) International application number:
**PCT/JP2017/037514**

(87) International publication number:
**WO 2018/096841 (31.05.2018 Gazette 2018/22)**

(54) **IMAGE CAPTURING DEVICE AND IMAGE CAPTURING METHOD**

BILDAUFNAHMEVORRICHTUNG UND BILDAUFNAHMEVERFAHREN

DISPOSITIF DE CAPTURE D'IMAGE ET PROCÉDÉ DE CAPTURE D'IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.11.2016 JP 2016230090**

(43) Date of publication of application:
**02.10.2019 Bulletin 2019/40**

(73) Proprietor: **FUJIFILM Corporation
Tokyo 106-8620 (JP)**

(72) Inventor: **ONO, Shuji
Tokyo 107-0052 (JP)**

(74) Representative: **Klunker IP
Patentanwälte PartG mbB
Destouchesstraße 68
80796 München (DE)**

(56) References cited:
WO-A1-2013/024636     JP-A- 2012 247 645
JP-A- 2013 093 789      US-A1- 2016 123 810
US-B2- 9 445 010

**Description**

**BACKGROUND OF THE INVENTION**

1. Field of the Invention

The present invention relates to an imaging apparatus and an imaging method, and in particular, to an imaging apparatus and an imaging method for acquiring a plurality of images by refracting light through an optical member.

2. Description of the Related Art

In the related art, a technique for acquiring images by lights of a plurality of specific wavelength ranges has been proposed. For example, a camera, which is called a multi-spectral camera or hyperspectral camera and acquires images of a plurality of specific wavelength ranges, has been proposed. Here, as a method for acquiring images of a plurality of specific wavelength ranges, the following method is known.

In the method of acquiring images of a plurality of specific wavelength ranges through one imaging operation with a plurality of cameras, a plurality of cameras capable of acquiring images of light of specific wavelength ranges are provided, and each camera acquires an image of light of each specific wavelength range.

On the other hand, in a method of acquiring images of a plurality of specific wavelength ranges by imaging a plurality of times with one camera, a plurality of filters that pass only light of a specific wavelength range are provided, the filters are exchanged for each imaging operation, and imaging is performed.

In addition, by using the optical system described in WO2013/018471A, it is possible to acquire images of a plurality of specific wavelength ranges through one imaging operation with one camera.

In addition, JP2016-090290A describes a technique of acquiring images of light of a plurality of specific wavelength ranges by acquiring images spectroscopically separated by a spectroscopic element. Specifically, in the technique, the light spectroscopically separated by using a prism and a diffraction grating as a spectroscopic element is encoded by modulating the intensity of light through an encoder, and then the spectroscopically separated image is reformed using a compression sensing technique.

US 2016/123810 A1 discloses an imaging apparatus having an optical member, a light transmissive filter, a directional sensor and an image acquisition section substantially as defined by claim 1. The light transmissive filter comprises color filters placed directly in front of light detecting pixels which each correspond to a different part of the image.

**SUMMARY OF THE INVENTION**

Here, as an application of images of a plurality of specific wavelength ranges, there is an inspection performed by comparing acquired images of a plurality of specific wavelength ranges. For example, in various fields such as growth inspection of agricultural crops and ocean inspection, there is an inspection performed by comparing images of a plurality of specific wavelength ranges.

In a case of comparing images of a plurality of specific wavelength ranges, it is necessary to perform accurate registration between a plurality of images. That is, in a case of performing the comparison, effective comparison can be made by accurately superimposing the subject images in the image.

However, in a case of acquiring images of a plurality of specific wavelength ranges through one imaging operation with a plurality of cameras and a plurality of imaging operations with one camera, it may be difficult to perform registration on the acquired images.

In addition, in a case of using the optical system described in WO2013/018471A, although it is not difficult to perform registration on the acquired images, the acquired images are not strictly based on information about light reflected from the same position on the subject, and thus the accuracy of comparison is reduced.

In addition, in the technique described in JP2016-090290A, the technique of compression sensing is used for re-formation of an image (spectroscopically separated image) separated by a spectroscopic element. Thus, it is necessary to provide an encoder in the camera, and therefore calculation processing (re-formation) of encoding is necessary. This calculation processing is a heavy load for a central processing unit (CPU) and takes time. Therefore, in many cases, it is difficult to observe a real-time moving image based on the technique described in JP2016-090290A.

The present invention has been made in consideration of the above-mentioned situations, and an object of the present invention is to provide an imaging apparatus and an imaging method in which there is no need for registration between images corresponding to a plurality of specific wavelengths, which is capable of acquiring images corresponding to a plurality of specific wavelengths based on light information at the same position of a subject so as to reduce the calculation load for acquiring the images corresponding to the plurality of specific wavelengths.

According to one aspect of the present invention, there is provided an imaging apparatus comprising the features of claim 1.

According to the present aspect, the first image and the second image, which are shifted by the optical member using the difference in refractive index due to the difference in wavelength between the first light and the second light, are acquired by the directional sensor. Therefore, according to the present aspect, the first image and the second image are acquired with the same optical axis. Thus, the first image and the second image are matched, and there is no need for registration between the images after image acquisition.

Further, according to the present aspect, the positions of the first image and the second image on the directional sensor are shifted by the pitch of the pixels by the optical member. In the directional sensor, pixels for receiving the first light and pixels for receiving the second light are alternately arranged. Consequently, in the present aspect, the first light and the second light reflected from the same position on the subject are separately received by different pixels, and the first image and the second image are generated. Therefore, it is possible to acquire the first image and the second image based on the information about light from the same position on the subject.

Further, according to the present aspect, the first image and the second image are acquired by the directional sensor composed of the pixels (the pixels for receiving the first light and the pixels for receiving the second light) which pupil-divide and selectively receive each of the first light and the second light. Thus, in the present aspect, the first image is generated on the basis of the information acquired by the pixels for receiving the first light, and the second image is generated on the basis of the information acquired by the pixels for receiving the second light. Therefore, special calculation for separately generating the first image and the second image is unnecessary, and the calculation load is reduced.

According to the present aspect, the light transmissive filter is provided inside the imaging lens. Therefore, it is possible to accurately transmit the first light and the second light, and the effect of the light transmissive filter on the first image and the second image is suppressed.

According to the present aspect, the light transmissive filter is provided between the first lens group and the second lens group. Therefore, it is possible to accurately transmit the first light and the second light, and the effect of the light transmissive filter on the first image and the second image is suppressed.

Preferably, the imaging apparatus further comprises a comparing section that compares output values of corresponding positions between the first image and the second image.

According to the present aspect, the comparing section compares the output values at the corresponding positions of the first image and the second image. Therefore, it is possible to compare the degrees of reflection of the first light and the second light of the subject.

Preferably, the optical member is a prism or plane-parallel glass.

According to the present aspect, the optical member is a prism or plane-parallel glass. Therefore, it is possible to accurately refract the first light and the second light in accordance with the respective wavelengths.

Preferably, the first light is light of a red wavelength range and the second light is light of a near-infrared wavelength range.

According to the present aspect, the first light is the light of the red wavelength range, and the second light is the light of the near-infrared wavelength range. Therefore, it is possible to acquire an image based on the reflection of the light of the red wavelength range and an image based on the reflection of the light of the near-infrared wavelength range of the subject.

Preferably, the directional sensor has pixels for receiving the first light and pixels for receiving the second light arranged in a pattern of a chess board.

According to the present aspect, the directional sensor has the pixels for receiving the first light and the pixels for receiving the second light arranged in the pattern of the chess board. Therefore, in the present aspect, in a case where the positions of the first image and the second image are shifted by the pitch of the pixels by the optical member, in particular, in a case where the positions are shifted by one pixel, the positions can be shifted by one pixel in any of the four directions toward the adjacent pixels.

Preferably, the directional sensor has a row of pixels for receiving the first light and a row of pixels for receiving the second light alternately arranged.

According to the present aspect, the directional sensor has the row of pixels for receiving the first light and the row of pixels for receiving the second light alternately arranged. Therefore, in the present aspect, in a case where the positions of the first image and the second image are shifted by the pitch of the pixels by the optical member, in particular, in a case where the positions are shifted by one pixel, the positions can be shifted by one pixel in any of the two directions toward the adjacent pixels opposed to each other.

Preferably, the directional sensor has a shape of a rectangle, and the optical member shifts the position of the first image and the position of the second image in a direction of a long side of the rectangle of the directional sensor or in a direction of a short side of the rectangle of the directional sensor.

According to the present aspect, the positions of the first image and the second image are shifted in a direction of a long side of the rectangle of the directional sensor or in a direction of a short side of the rectangle of the directional sensor. Thereby, in the present aspect, it is possible to shift the positions of the first image and the second image in accordance with the shape of the rectangular directional sensor.

According to another aspect of the present invention, there is provided an imaging method comprising the features of claim 8.

According to the present invention, the first image and the second image, which are shifted by the optical member using the difference in refractive index due to the difference in wavelength between the first light and the second light, are acquired by the directional sensor. Therefore, the first image and the second image are acquired with the same optical axis. Thus, the first image and the second image are matched, and there is no need for registration between the images after image acquisition. Further, according to the present invention, the positions of the first image and the second image on the directional sensor are shifted by one pitch of the pixels by the optical member. In the directional sensor, pixels for receiving the first light and pixels for receiving the second light are alternately arranged. Therefore, the first light and the second light reflected from the same position on the subject are separately received by different pixels, and the first image and the second image are generated. Therefore, it is possible to acquire the first image and the second image based on the information about light from the same position on the subject. Further, according to the present invention, the first image and the second image are acquired by the directional sensor composed of the pixels (the pixels for receiving the first light and the pixels for receiving the second light) which pupil-divide and selectively receive each of the first light and the second light. Therefore, the first image is generated on the basis of the information acquired by the pixels for receiving the first light, and the second image is generated on the basis of the information acquired by the pixels for receiving the second light. Therefore, special calculation for separately generating the first image and the second image is unnecessary, and the calculation load is reduced.

**BRIEF DESCRIPTION OF THE DRAWINGS**

Fig. 1 is a perspective view showing a digital camera which is an example of an imaging apparatus.
Fig. 2 is a conceptual diagram showing paths of rays.
Fig. 3 is a diagram for explaining a prism which is an example of an optical member.
Fig. 4 is a diagram for explaining a prism which is an example of an optical member.
Fig. 5 is a view showing a light transmissive filter.
Fig. 6 is a block diagram showing a functional configuration example of a digital camera
Fig. 7 is a diagram showing a directional sensor.
Figs. 8A to 8C are diagrams each showing acquisition of a first image and a second image.
Figs. 9A to 8C are diagrams each showing acquisition of the first image and the second image in a case where there is no prism.
Fig. 10 is a diagram showing an operation flow of a digital camera.
Fig. 11 is a conceptual diagram showing paths of rays.
Fig. 12 is a diagram for explaining a plane-parallel glass.
Fig. 13 is a diagram for explaining a plane-parallel glass.
Fig. 14 is a diagram showing arrangement of pixels of a directional sensor.

**DESCRIPTION OF THE PREFERRED EMBODIMENTS**

Hereinafter, preferred embodiments of an imaging apparatus and an imaging method according to the present invention will be described with reference to the accompanying drawings.

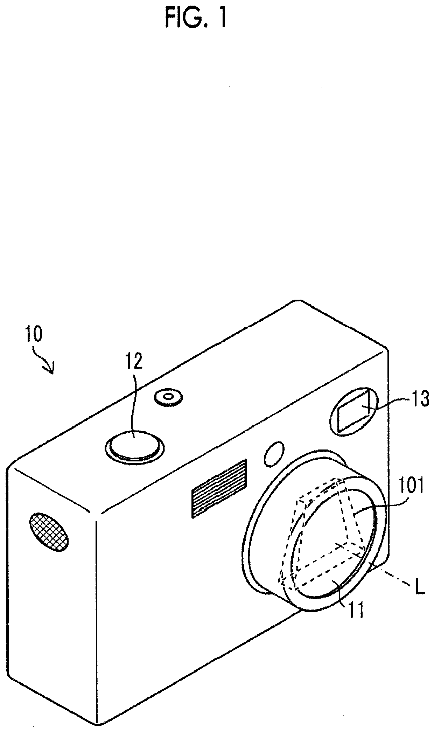

Fig. 1 is a perspective view showing a digital camera 10 which is an example of the imaging apparatus of the present invention. In the example shown in Fig. 1, an imaging section 11, a flash 13, and the like are provided on the front face of the camera body of the digital camera 10, and a release button 12 and the like are provided on the top face of the camera body. The symbol "L" in Fig. 1 indicates the optical axis of the imaging section 11. A prism 101, which is an example of an optical member as a part of an imaging optical system 14, is indicated by a dotted line. The prism 101 is provided inside the digital camera 10.

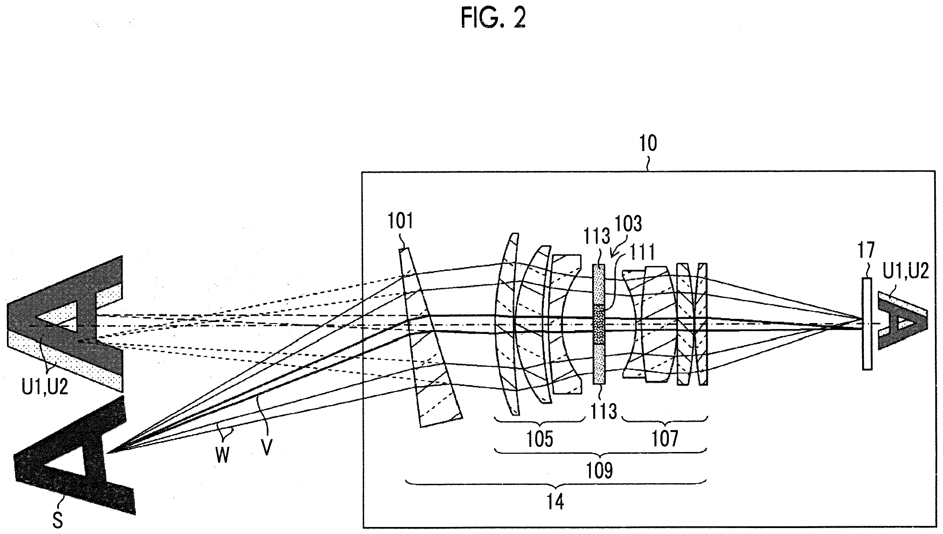

Fig. 2 is a conceptual diagram showing paths of rays in the digital camera 10. In Fig. 2, first light V and second light W reflected by a subject S are captured by the digital camera 10. Here, the first light V and the second light W are lights having different wavelengths or wavelength ranges. Although the wavelength ranges of the first light V and the second light W are not particularly limited. For example, the first light V is light of the red wavelength range, and the second light W is light of the near-infrared wavelength range. Here, the red wavelength range is in the range of 0.62 $\mu$m or more and less than 0.75 $\mu$m, and the near-infrared wavelength range is in the range of 0.75 $\mu$m or more and less than 1.4 $\mu$m. An image of the first light V of the subject S is set as a first image U1, and an image of the second light W is set as a second image U2.

The prism 101 is an example of the optical member. The prism 101 is provided in front of an imaging lens 109, and the first light V and the second light W are incident into the prism 101 before being incident into the imaging lens 109. The prism 101 refracts the first light V and the second light W having mutually different wavelengths of light with refractive indexes corresponding to the respective wavelengths, thereby shifting the positions of the first image of the first light V and the second light of the second image W. That is, on the basis of the difference in refractive index due to the difference between the wavelength of the first light V and the wavelength of the second light W, the positions of the first image and the second image are shifted by a pitch of the pixels on the directional sensor. In order to shift the first image and the second image by the pitch of the pixels on a directional sensor 17, it is necessary to adjust the prism 101, the first light V, the second light W, and one pitch of the directional sensor 17. A specific example in the case where the positions of the first image and the second image are shifted by one pitch of the pixels of the directional sensor will be described below. The scope of application of the present invention is not limited to the example of shifting by one pitch.

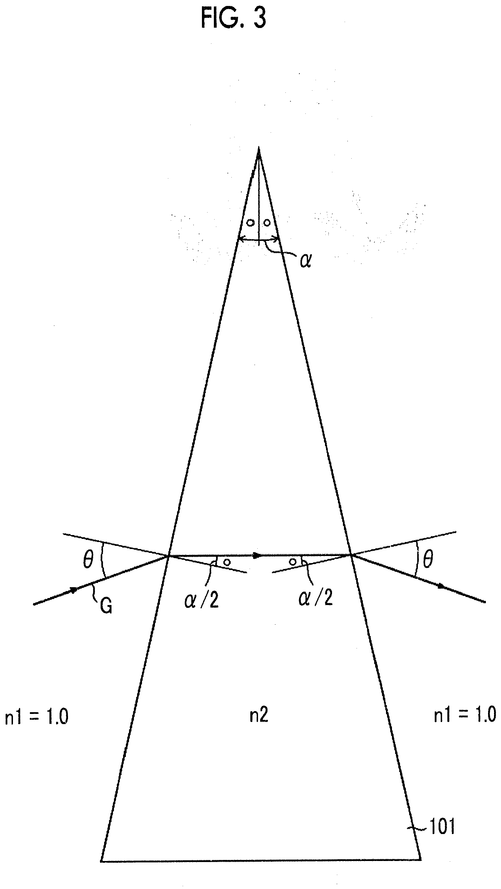

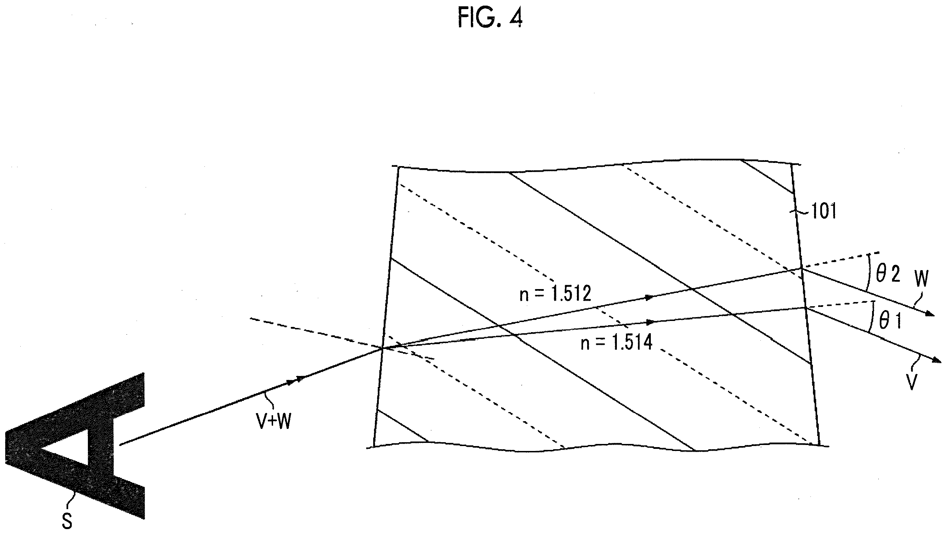

Figs. 3 and 4 are diagrams for explaining a prism which is an example of the optical member. Fig. 3 shows a cross-sectional view of the prism 101 as an example of the optical member. Fig. 4 shows the traveling directions of the first light V and the second light W traveling through the prism 101.

First, the traveling angle of rays in a case where a ray G passes through the prism 101 having an apex angle $\alpha$ shown in Fig. 3 at an incident angle and an exit angle, which are substantially symmetrical, will be described. The prism 101 is also called a tapered glass or a wedge plate.

In a case where the ray G travels from a medium with a refractive index n1 to the prism 101 with a refractive index n2, Expression (1) is established in accordance with Snell's law.

$$n1 \times \sin\theta = n2 \times \sin(\alpha/2) \ldots (1)$$

Then, an expression for acquiring $\theta$ from Expression (1) is Expression (2).

$$\theta = \mathrm{asin}((n2/n1)\sin(\alpha/2)) \ldots (2)$$

Next, the traveling of the first light V and the second light W having different wavelengths in the prism 101 will be described. Fig. 4 shows that the first light V and the second light W reflected from one point on the subject S pass through the prism 101 explained in Fig. 3.

The first light V and the second light W are emitted from the subject S and are incident into the prism 101 through the same path. However, since the first light V and the second light W have different wavelengths, those are dispersed by the prism 101. In a case where the wavelength of the first light V is 670 nm and the wavelength of the second light W is 780 nm, $\theta1$ and $\theta2$ can be calculated as follows.

The refractive index of the typical glass material BK7 is n = 1.514 at a wavelength of 670 nm and n = 1.512 at a wavelength of 780 nm. In a case where the glass material BK7 passes through the prism 101 having an apex angle of 5.0 degrees, $\theta$ can be obtained from Expressions (1) and (2) as follows.

At $\alpha$ = 5.0, n1 = 1.0, and n2 = 1.514, $\theta1$ = 3.787.

At a = 5.0, n1 = 1.0, and n2 = 1.512, $\theta2$ = 3.782.

Then, the difference between $\theta1$ and $\theta2$ is calculated by Expression (3).

$$\theta1 - \theta2 = \Delta\theta = 0.005 \ldots (3)$$

In a case where the light ray passes through the prism 101, it is incident into the prism 101 and emerges from the prism 101, such that the angle of refracting of the ray becomes $\Delta\theta \times 2$, and a difference of 0.01 degree occurs. Therefore, in a case where the light with the wavelength of 670 nm and the light with the wavelength of 780 nm are emitted from the same location on the subject S and pass through the prism 101 with the apex angle of 5.0 degrees of the glass material BK7, the light with each wavelength travels with an angular difference of 0.01 degree.

Here, in a case where the angle of view of the imaging lens 109 is 30 degrees and the directional sensor 17 having the number of pixels of 3000 is used, the difference in incident angle for shifting by one pixel is 0.01 degree. Accordingly, by providing a glass (prism 101) of BK7 having a taper angle of 5.0 degrees, it is possible to shift the positions of the images of red (a wavelength of 670 nm) and near-infrared (a wavelength of 780 nm) by one pixel on the directional sensor 17. Thus, for example, the information of the same position on the subject S can be acquired using the first light V and the second light W at the odd pixels and the even pixels of the directional sensor 17, respectively.

Returning to Fig. 2, the first light V and the second light W refracted to the prism 101 pass through a front group 105 of the imaging lens 109, transmitted through a light transmissive filter 103, and pass through a rear group 107. The light transmissive filter 103 is disposed between a first lens group (front group) and a second lens group (rear group) of the imaging lens 109 composed of the first lens group and the second lens group. It should be noted that the light transmissive filter 103 may be provided anywhere inside the imaging lens 109 as long as the first light V and the second light W can be efficiently transmitted.

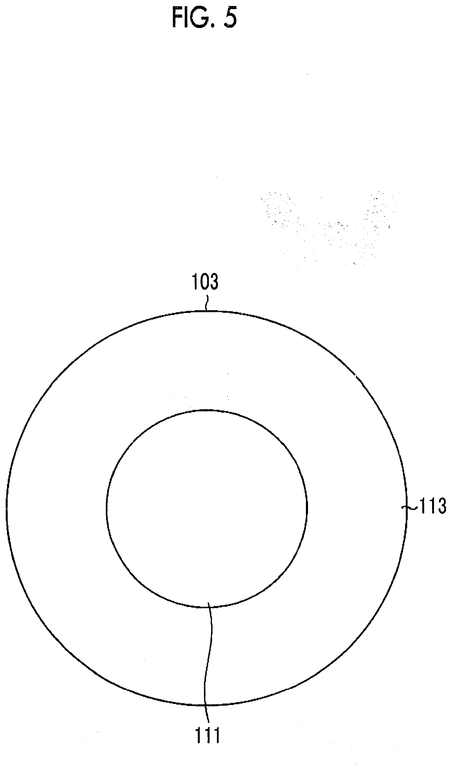

Fig. 5 is a view showing the light transmissive filter 103. The light transmissive filter 103 shown in Fig. 5 has a circular shape. The light transmissive filter 103 has a first filter region 111 that transmits only the first light V in the region of the inner circle and a second filter region 113 that transmits only the second light W in the outer concentric circle. It should be noted that the shape of the light transmissive filter 103 is not limited to the circular shape, but various shapes may be employed.

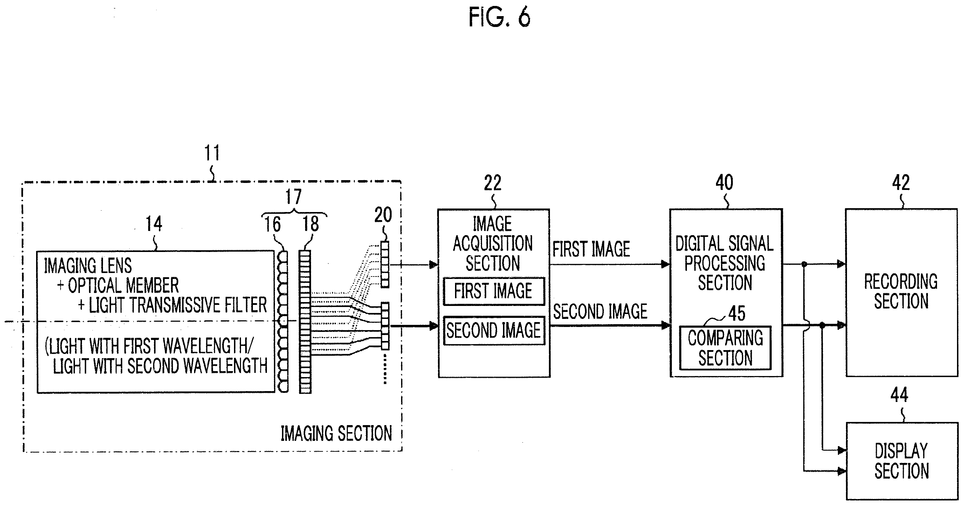

Fig. 6 is a block diagram showing a functional configuration example of the digital camera 10.

As shown in Fig. 6, the digital camera 10 comprises an imaging section 11 consisting of an imaging optical system 14 and a directional sensor 17. The imaging optical system 14 has a prism 101, a light transmissive filter 103, and an imaging lens 109. The directional sensor 17 has a microlens array 16 and an image sensor 18.

The imaging section 11 captures a time series image through the imaging optical system 14 and the directional sensor 17. The imaging section 11 converts a subject image into a signal voltage (or electric charge) of which an amount corresponds to the amount of incident light. The subject image is formed on a light receiving surface of light receiving cells (photoelectric conversion elements) of the directional sensor 17 (image sensor 18) through the imaging optical system 14.

The signal voltages (or electric charges) accumulated in the image sensor 18 can be stored in the light receiving cells themselves or provided capacitors. The stored signal voltages (or electric charges) are read together with the selection of the positions of the light receiving cells by the method of using a MOS type imaging element (so-called CMOS sensor) based on the X-Y addressing.

Thereby, it is possible to read, from the image sensor 18, the pixel signals indicating the first image based on the first light V and the pixel signals indicating the second image based on the second light W. From the image sensor 18, the pixel signals indicating the first image and the second image are successively read out at a predetermined frame rate (for example, 24p, 30p, or 60p frames per second).

The pixel signal (voltage signal), which is read from the image sensor 18, for each light receiving cell is sampled through correlated double sampling processing (processing of acquiring precise pixel data by taking a difference between a feed-through component level and a signal component level included in the output signal of each light receiving cell in order to reduce noise (particularly thermal noise) included in the sensor output signal). Then, the pixel signal is amplified, and thereafter added to an A/D converter 20. The A/D converter 20 converts the pixel signals, which are sequentially input, into digital signals, and outputs the signals to an image acquisition section 22. Some of the MOS type sensors may include an A/D converter 20. In this case, the digital signals are directly output from the image sensor 18.

The image acquisition section 22 selects the positions of the light receiving cells of the image sensor 18 and reads the pixel signals, thereby simultaneously or selectively acquiring the pixel signals indicating the first image and the pixel signals indicating the second image.

That is, by selectively reading the pixel signals of the light receiving cells (pixels) into which the first light V of the image sensor 18 is incident, the pixel signals indicating the first image can be acquired. On the other hand, by selectively reading the pixel signals of the light receiving cells (pixels) into which the second light W of the image sensor 18 is incident, the pixel signals indicating the second image can be acquired. Therefore, the pixels receiving the first light V and the pixels receiving the second light W pupil-divide and selectively receive the first light V and the second light W.

It should be noted that all the pixel signals may be read from the image sensor 18 and temporarily stored in the buffer memory and may be divided into groups of pixel signals of the two images of the first image and the second image, from the pixel signals stored in the buffer memory.

The pixel signals indicating the first image and the pixel signals indicating the second image acquired by the image acquisition section 22 are output to a digital signal processing section 40.

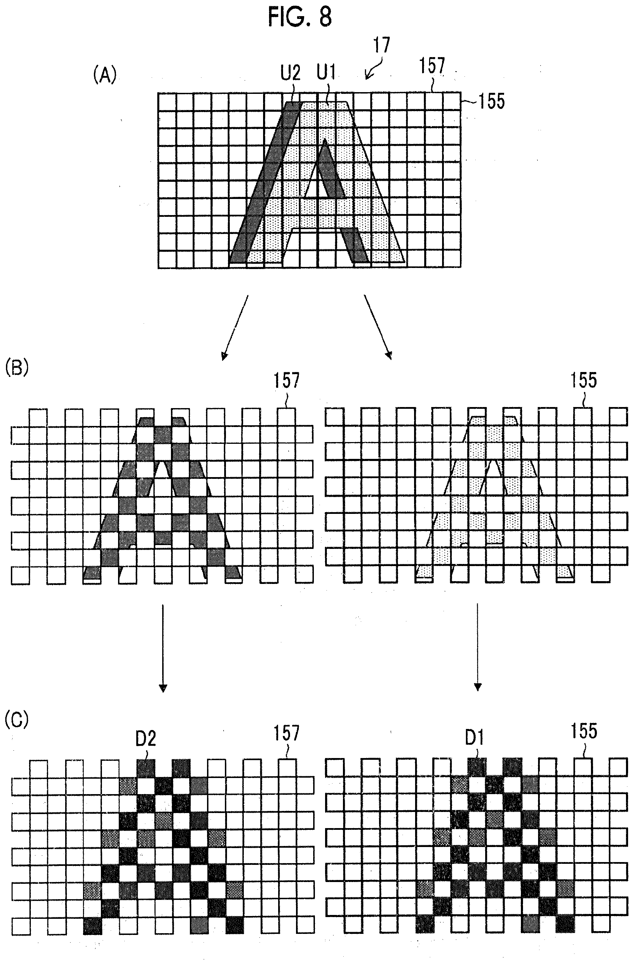

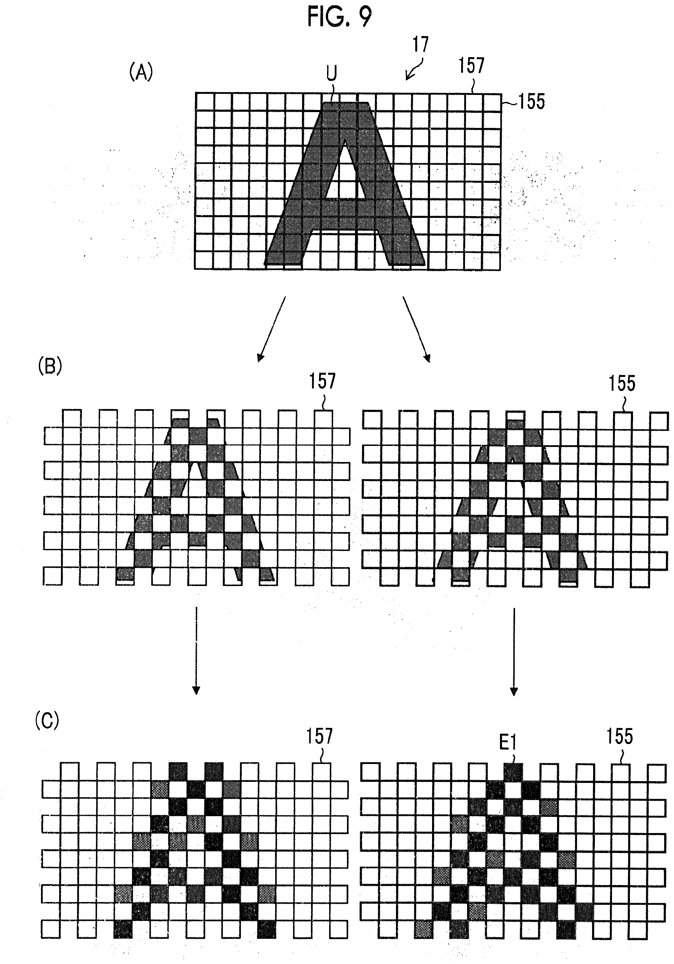

The digital signal processing section 40 performs signal processing of offset processing, gamma correction processing, and interpolation processing on the input digital pixel signals. Here, the interpolation processing is to generate values of pixels which have not received light on the basis of signals of pixels around the pixels. In other words, regarding the pixel signals acquired by the directional sensor 17, since the directional sensor 17 has a configuration, in which the pixels for receiving the first light V and the pixels for receiving the second light W are alternately arranged, pixel signals corresponding to the entire region of the subject S are not acquired (refer to Figs. 8B and 9B). Therefore, in a case of generating the image of the subject S, it is necessary to perform interpolation on the basis of signals of pixels around a location where the pixel signals could not be acquired.

The digital signal processing section 40 has a comparing section 45. The comparing section 45 compares the output values of the corresponding positions of the first image and the second image. Here, the output values are values of pixels constituting an image, and may be values of photoelectric conversion which are output from the directional sensor or may be values after interpolation. In the example shown in Fig. 6, the digital signal processing section 40 has the comparing section 45, but the present invention is not limited to the present example. For example, the image acquisition section 22 may have the comparing section 45.

The pixel signals indicating the first image and the second image processed by the digital signal processing section 40 are output to a recording section 42 and a display section 44, respectively. The recording section 42 records pixel signals for recording a moving image, which indicate the first image and the second image processed by the digital signal processing section 40, in a recording medium (a hard disk, a memory card, or the like).

The display section 44 displays the first image and the second image on the basis of the pixel signals for displaying the moving image which indicate the first image and the second image processed by the digital signal processing section 40. The display section 44 can also reproduce the first image and the second image on the basis of the pixel signals recorded in the recording section 42.

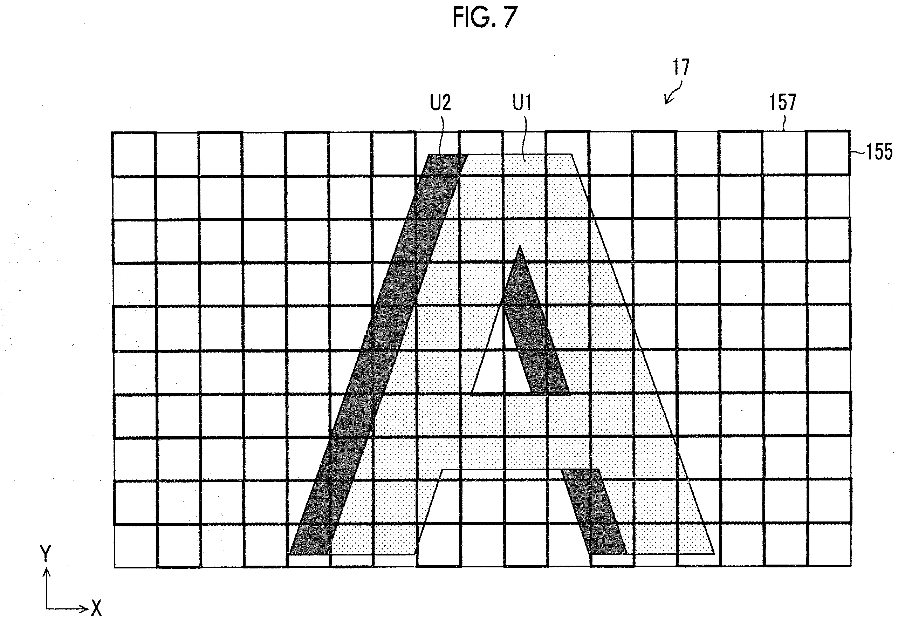

Fig. 7 is a diagram showing the directional sensor 17. In the directional sensor 17 shown in Fig. 7, pixels 155 for receiving the first light V and pixels 157 for receiving the second light W are alternately arranged like a pattern of a chess board. Each pixel 155 receiving the first light V is a pixel that receives only the first light V, for example, by providing a filter that transmits only the first light V. Each pixel 157 receiving the second light W is a pixel that receives only the second light W, for example, by providing a filter that transmits only the second light W.

The directional sensor 17 has a rectangular shape. The first image U1 and the second image U2 are arranged such that the position of the first image and the position of the second image are shifted by one pitch of the pixels in the direction of the long side of the rectangle (the X axis direction in the drawing). The first image U1 and the second image U2 may be shifted in the direction of the short side of the rectangle (the Y axis direction in the drawing).

Figs. 8A to 8C are diagrams for explaining acquisition of the first image and the second image. Fig. 8A is a diagram showing the light distribution of the first light V and the second light W on the directional sensor 17 described in Fig. 7. Fig. 8B is a diagram separately showing the light distributions of the pixels 155 for receiving the first light V and the pixels 157 (pupil selection pixel) for receiving the second light W. Fig. 8C shows the distributions of the photoelectric conversion signals.

As shown in Fig. 8A, since the first light V and the second light W are refracted by the prism 101, the light distribution of the first light V and the light distribution of the second light W are deviated. In the case shown in Fig. 8A, as described above, the prism 101 and the wavelengths of the first light V and the second light W are selected so as to be shifted by one pitch of the pixels of the directional sensor 17. Thus, the light distribution of the first light V and the light distribution of the second light W are shifted by one pitch of the pixels of the directional sensor 17.

In Fig. 8B, the pixels 155 for receiving the first light V and the pixels 157 for receiving the second light W of the directional sensor 17 are shown separately. As shown in Fig. 8B, the first light V and the second light W are refracted by one pitch of the pixels by the prism 101. Therefore, the first light V and the second light W reflected at the same position on the subject S each can be received by the pixels. That is, the first light V and the second light W are made incident on the adjacent pixels by the prism 101. Therefore, the first light V and the second light W reflected from the same position on the subject S each can be received by separate pixels adjacent to each other.

Fig. 8C conceptually shows a photoelectrically converted signal on the basis of the light received by the pixels 155 for receiving the first light V and the pixels 157 for receiving the second light W. In such a manner, in a case where the pixels 155 for receiving the first light V and the pixels 157 for receiving the second light W receive light as shown in Fig. 8B, values of the photoelectric conversion signals based on the received light are obtained. For example, by comparing the output values of a pixel D1 among the pixels 155 for receiving the first light V and a pixel D2 among the pixels 157 for receiving the second light W, it is possible to compare the first light V and the second light W reflected at the same position on the subject S.

As shown in Figs. 8A to 8C, in the present invention, the first light V and the second light W reflected at the same position on the subject S are refracted by the prism 101 so as to be shifted by one pitch of the pixels of the directional sensor 17, and each are received by separate pixels adjacent to each other. Therefore, it is possible to compare the first light V and the second light W reflected at the same position on the subject S by using the pixel signals subjected to the photoelectric conversion based on the light received by the pixels.

On the other hand, even in a case where the directional sensor 17 composed of the pixels 155 for receiving the first light V and the pixels 157 for receiving the second light W is used, the prism 101 may not be provided. In this case, it is difficult for the pixels to receive the first light V and the second light W reflected at the same position on the subject S. This will be explained below.

Figs. 9A to 8C are diagrams for explaining acquisition of the first image and the second image in a case where there is no prism. Fig. 9A is a diagram showing the light distributions of the first light V and the second light W. Fig. 9B is a diagram showing the light distributions of the pixels 155 for receiving the first light V and the pixels 157 (pupil selection pixel) for receiving the second light W. Fig. 9C shows the distributions of the photoelectric conversion signals.

As shown in Fig. 9A, in a case where the prism 101 is not provided, the first light V and the second light W are not refracted. Therefore, the light distributions of the first light V and the second light W on the incident surface of the directional sensor are not deviated.

In Fig. 9B, the pixels 155 for receiving the first light V and the pixels 157 for receiving the second light W of the directional sensor 17 are shown separately. As shown in Fig. 9B, the first light V and the second light W are not refracted by the prism 101. Therefore, the directional sensor 17 receives either one of the first light V or the second light W reflected at the same position on the subject S. That is, the first light V and the second light W reflected at a certain location on the subject S are incident on one pixel, but the pixel into which the light is incident is the pixel 155 for receiving the first light V or the pixel 157 for receiving the second light W. Therefore, the directional sensor receives only either one of the first light V or the second light W.

Fig. 9C conceptually shows a photoelectrically converted signal on the basis of the light received by the pixels 155 for receiving the first light V and the pixels 157 for receiving the second light W. In such a manner, in a case where the pixels 155 for receiving the first light V and the pixels 157 for receiving the second light W receive light as shown in Fig. 9B, values of the photoelectric conversion signals based on the received light are obtained.

In this case, the directional sensor 17 receives only either one of the first light V or the second light W reflected at a certain location on the subject S. Therefore, as shown in Fig. 8C, it is difficult to strictly compare the first light V and the second light W reflected at the same position on the subject S. For example, in the pixels 157 for receiving the second light W, there is no pixel among the pixels 157 for receiving the second light W, corresponding to a pixel E1 among the pixels 155 for receiving the first light V. Therefore, in this case, it is difficult to perform accurate comparison between the first light V and the second light W reflected at the same position on the subject S.

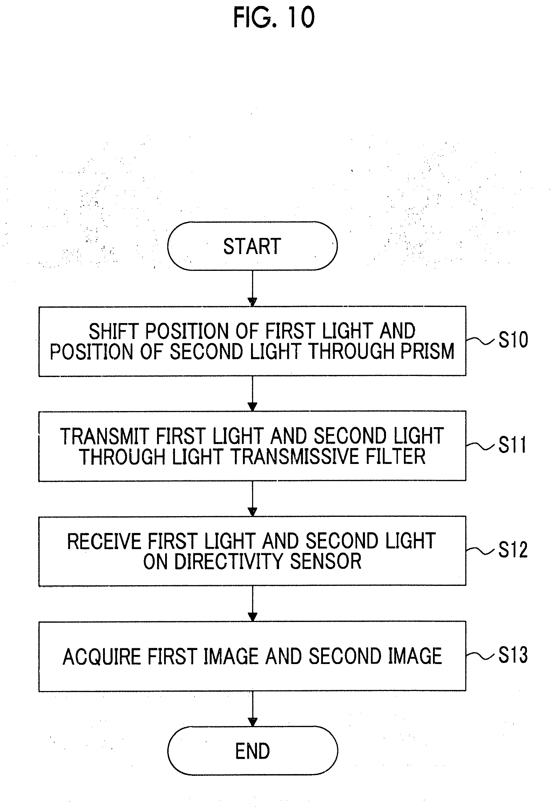

Fig. 10 shows an operation flow of the digital camera 10.

First, the digital camera 10 captures the first light V and the second light W reflected from the subject S, refracts the first light V and the second light W through the prism 101, and shifts the position of the first image and the position of the second image on the directional sensor 17 (step S10). Thereafter, the first light V and the second light W refracted to the prism 101 are transmitted through the light transmissive filter 103 (step S11). The first light V is transmitted through the first filter region 111 for transmitting only the first light V, and the second light W is transmitted through the second filter region 113 for transmitting only the second light W. Then, the directional sensor 17 receives the first light V and the second light W (step S12). In the directional sensor 17, the first image and the second image are shifted by one pitch of the pixels of the directional sensor 17. Then, the first image and the second image are acquired (step S13).

The above-mentioned configurations and functions are appropriately implemented by optional hardware, software, or a combination of both thereof. For example, the present invention can also be applied to a program which causes a computer to execute the above-mentioned processing step (processing order), a computer-readable recording medium (non-transitory recording medium) in which such a program is recorded, or a computer in which such a program can be installed.

Next, modification examples will be described.

(Modification Example 1)

In Modification Example 1, the optical member in the above-mentioned invention is changed from the prism 101 to a plane-parallel glass 151. Similarly to the prism 101, the plane-parallel glass 151 is also able to refract light with a different refractive index in accordance with a wavelength of light. Thus, it is possible to shift the first image and the second image.

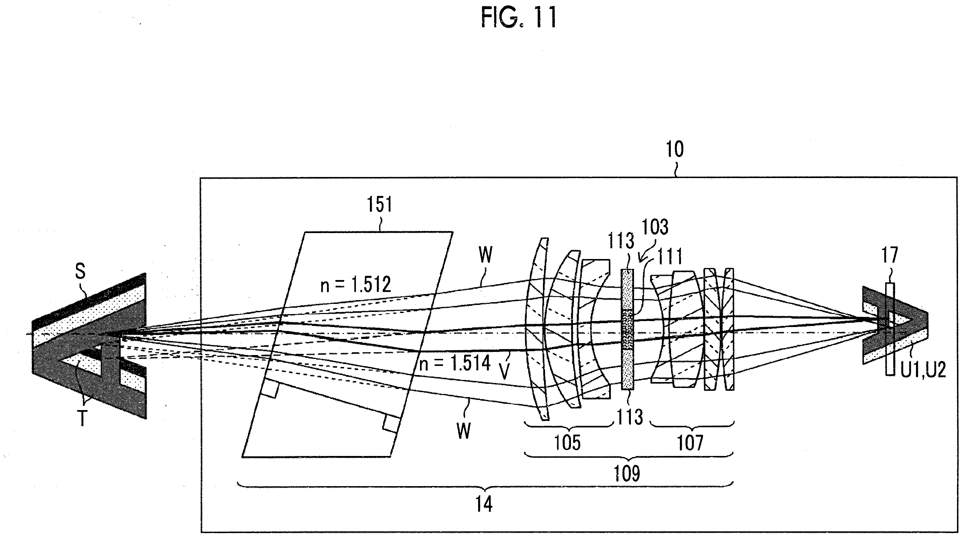

Fig. 11 is a conceptual diagram showing paths of rays in the digital camera of the present example. In Fig. 11, the optical member is changed from the prism 101 to the plane-parallel glass 151, as compared with Fig. 2. It should be noted that the same reference numerals are given to the portions already explained in Fig. 2, and the explanation is omitted.

As shown in Fig. 11, in a case where light is transmitted through the plane-parallel glass 151 placed obliquely, light having a different wavelength has a different refractive index, and thus an angle of refraction in a case where the light is incident into the glass is different. That is, the first light V and the second light W reflected from the subject S have different wavelengths, and are therefore refracted at different refractive indexes.

The first light V and the second light W transmitted through the plane-parallel glass 151 and thereafter emitted are refracted again and travel in parallel to the first light V and the second light W before being incident into the plane-parallel glass 151, but the exit positions of the first light V and the second light W transmitted through the plane-parallel glass 151 are different.

Then, in a case where the directional sensor 17 receives the first light V and the second light W, the position of the first image and the position of the second image are translated (shifted). Since the amount of translation depends on the wavelength of light, the first image and the second image are shifted in the shift direction. This amount of shift is made to coincide with one pitch of the pixels of the directional sensor 17.

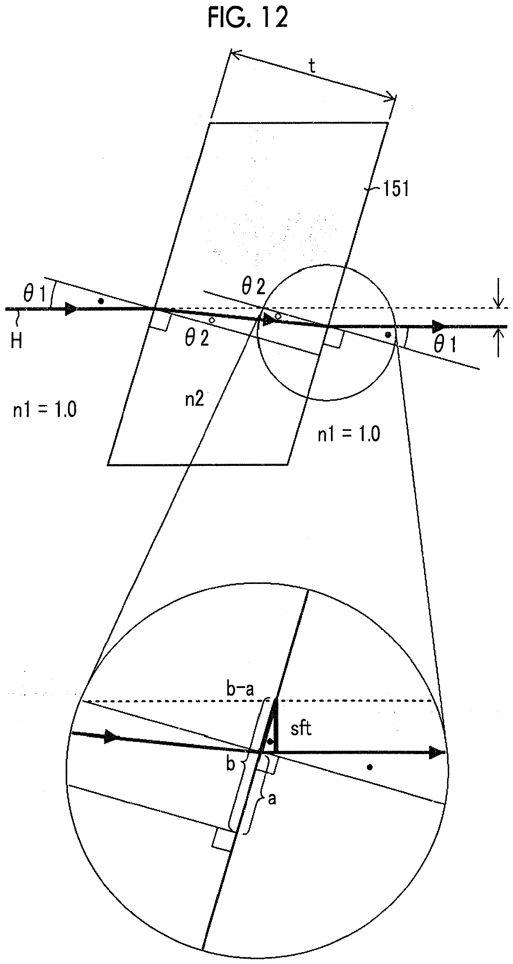

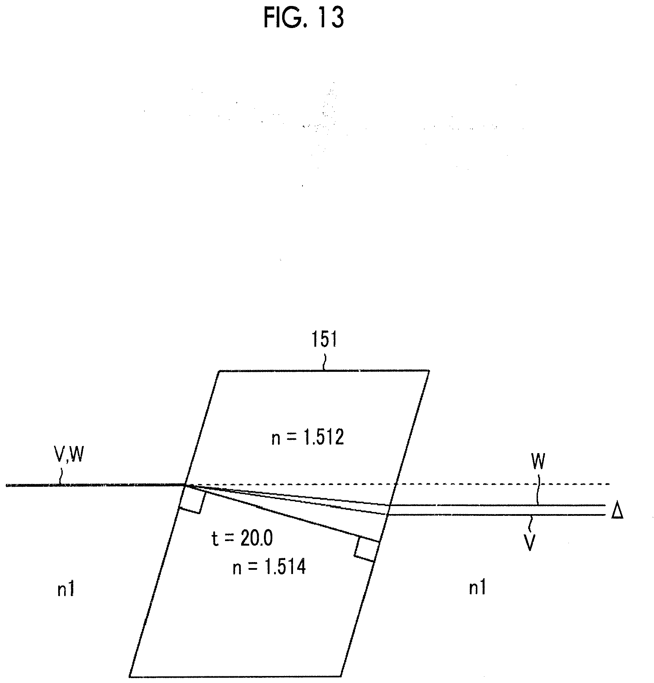

Figs. 12 and 13 are diagrams for explaining the plane-parallel glass 151 as the optical member. Fig. 12 shows a cross-sectional view of the plane-parallel glass 151 as an example of the optical member. Fig. 13 shows the traveling directions of the first light V and the second light W traveling through the plane-parallel glass 151.

The shift amount (indicated by sft in the drawing) of a ray H transmitted through the plane-parallel glass 151 having the width t shown in Fig. 12 will be described.

In a case where the plane-parallel glass 151 is tilted such that the ray H is obliquely incident, the incident ray and the exit ray are shifted in parallel to each other along the oblique plane. The shift amount (sft) is determined by the inclination, thickness, and refractive index of the plane-parallel glass 151.

According to Snell's law, Expression (4) is established for the ray H shown in Fig. 12.

$$n1 \times \sin\theta1 = n2 \times \sin\theta2 \ldots (4)$$

Then, an expression for acquiring $\theta2$ from Expression (4) is Expression (5).

$$\theta2 = \mathrm{asin}((n1/n2)\sin\theta1) \ldots (5)$$

On the other hand, b and a in Fig. 12 can be represented as follows.

$$b = t \times \tan\theta1, \; a = t \times \tan\theta2, \; b\text{-}a = t(\tan\theta1\text{-}\tan\theta2)$$

The relationship between the shift amounts (sft), (b-a), and $\theta1$ is represented by Expression (6).

$$\mathrm{sft}/(b\text{-}a) = \cos\theta1 \ldots (6)$$

By substituting the values of $\theta2$ and (b-a) into Expression (6), the shift amount (sft) can be obtained as in Expression (7).

$$\text{Shift amount (sft)} = t(\tan\theta1\text{-}\tan\theta2)\cos\theta1 = t(\tan\theta1\text{-}\tan(\mathrm{asin}((n1/n2)\sin\theta1)))\cos\theta1 \ldots \quad (7)$$

Specific examples are shown below. Fig. 13 shows a case where the first light V and the second light W are incident on the plane-parallel glass 151. The plane-parallel glass 151 shown in Fig. 13 has a plane-parallel glass thickness t = 20.0, a tilt angle $\theta1$ = 33.7 degrees, and a glass material is BK7. It should be noted that n1 = 1.0 in Fig. 13.

In this case, for the first light V (a wavelength of 670 nm), since n2 = 1.514, sft = 4.5431. Further, for the second light W (a wavelength of 780 nm), since n2 = 1.512, sft = 4.5331. The difference $\Delta$ between the shift amounts of the first light V and the second light W is $\Delta$ = 0.0100.

In the directional sensor 17, the image of the first light V and the image of the second light W are shifted by the difference $\Delta$ of the shift amount.

In a case where the imaging magnification is set such that an object having a size of 50 mm has a size of 5000 pixels on the image plane, the image of the wavelength of 670 nm and the image of the wavelength of 780 nm are captured to be shifted by one pitch of the pixels of the directional sensor.

In such a manner, it is possible to use the plane-parallel glass 151 instead of the prism 101 as the optical member. In a case where the shift amount between the first image U1 and the second image U2 is large, the prism 101 is used. In a case where the shift amount is small, the plane-parallel glass 151 is used.

(Modification Example 2)

Next, Modification Example 2 will be described. In Modification Example 2, arrangement of the pixels for receiving the first light V and the pixels for receiving light of the second pixel in the directional sensor 17 is different from those described in Fig. 7 in the above-mentioned invention.

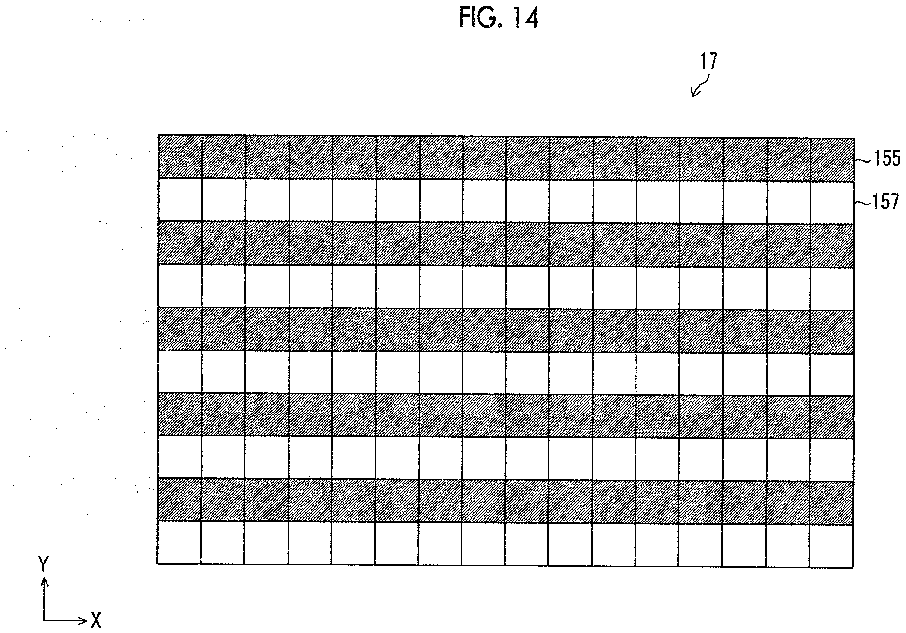

Fig. 14 is a diagram showing arrangement of pixels of the directional sensor 17 of the present example. In the drawing shown in Fig. 14, the pixels 155 for receiving the first light V and the pixels 157 for receiving the second light W are alternately arranged along the Y axis direction (direction of the short side of the rectangle). That is, the directional sensor 17 has a row of pixels 155 for receiving the first light V and a row of pixels 157 for receiving the second light W, where the rows are alternately arranged along the Y axis direction. Further, the directional sensor 17 may have a row of pixels 155 for receiving the first light V and a row of pixels 157 for receiving the second light W, where the rows are arranged alternately along the X axis direction (direction of the long side of the rectangle).

Although the example of the present invention has been described above, it is apparent that the present invention is not limited to the above-mentioned embodiments, and may be modified into various forms without departing from the scope of the present invention.

Explanation of References

    10: digital camera
    11: imaging section
    12: release button
    13: flash
    14: imaging optical system
    16: microlens array
    17: directional sensor
    18: image sensor
    20: A/D converter
    22: image acquisition section
    40: digital signal processing section
    42: recording section
    44: display section
    45: comparing section
    101: prism
    103: light transmissive filter
    109: imaging lens
    111: first filter region
    113: second filter region
    151: plane-parallel glass
    155: pixel for receiving first light
    157: pixel for receiving second light
    Steps S10 to S13: steps of the imaging method

**Claims**

1.  An imaging apparatus (10) comprising:

    an optical member (101, 151) that refracts first light and second light having mutually different wavelengths of light with refractive indexes corresponding to the respective wavelengths so as to shift a position of a first image of the first light and a position of a second image of the second light;
    a light transmissive filter (103) that has a first filter region (111) through which only the first light is transmitted and a second filter region (113) through which only the second light is transmitted;
    a directional sensor (17) that has a plurality of pixels which pupil-divide and selectively receive each of the first light transmitted through the first filter region (111) and the second light transmitted through the second filter region (113), where pixels for receiving the first light and pixels for receiving the second light are alternately arranged; and
    an image acquisition section (22) that acquires the first image and the second image from the directional sensor (17),
    wherein the optical member (101, 151) shifts the position of the first image and the position of the second image on the directional sensor (17) by a pitch of the pixels on the basis of a difference in refractive index due to a difference between the wavelength of the first light and the wavelength of the second light, the light transmissive filter (103) is provided inside an imaging lens (109) through which the first light and the second light are transmitted, and the light transmissive filter (103) is provided between a first lens group (105) and a second lens group (107) of the imaging lens (109) which is composed of the first lens group (105) and the second lens group (107).

2. The imaging apparatus (10) according to claim 1, further comprising a comparing section (45) that compares output values of corresponding positions between the first image and the second image.

3. The imaging apparatus according to claim 1 or 2, wherein the optical member (101, 151) is a prism or plane-parallel glass.

4. The imaging apparatus (10) according to any one of claims 1 to 3, wherein the first light is light of a red wavelength range and the second light is light of a near-infrared wavelength range.

5. The imaging apparatus (10)according to any one of claims 1 to 4, wherein the directional sensor has pixels for receiving the first light and pixels for receiving the second light arranged in a pattern of a chess board.

6. The imaging apparatus (10) according to any one of claims 1 to 4, wherein the directional sensor (17) has a row of pixels for receiving the first light and a row of pixels for receiving the second light alternately arranged.

7. The imaging apparatus (10) according to any one of claims 1 to 6,

wherein the directional sensor (17) has a shape of a rectangle, and
wherein the optical member (101 151) shifts the position of the first image and the position of the second image in a direction of a long side of the rectangle of the directional sensor (17) or in a direction of a short side of the rectangle of the directional sensor (17).

8. An imaging method comprising:

shifting a position of a first image of first light and a position of a second image of second light through an optical member (101, 151) by refracting the first light and the second light having mutually different wavelengths of light with refractive indexes corresponding to the respective wavelengths;
transmitting the first light and the second light through a light transmissive filter (103) that has a first filter region (111) through which only the first light is transmitted and a second filter region (113) through which only the second light is transmitted, wherein the light transmissive filter is provided inside an imaging lens (105) through which the first light and the second light are transmitted, and is provided between a first lens group (105) and a second lens group (107) of the imaging lens (109) which is composed of the first lens group (105) and the second lens group (107); and
receiving the first light and the second light through a directional sensor (17) that has a plurality of pixels which pupil-divide and selectively receive each of the first light transmitted through the first filter region (111) and the second light transmitted through the second filter region (113), where pixels for receiving the first light and pixels for receiving the second light are alternately arranged; and
acquiring the first image and the second image from the directional sensor (17),
wherein in the shifting performed through the optical member (101, 151), the position of the first image and the position of the second image on the directional sensor (17) are shifted by a pitch of the pixels on the basis of a difference in refractive index due to a difference between the wavelength of the first light and the wavelength of the second light.

**Patentansprüche**

1. Bildaufnahmevorrichtung (10), umfassend:

ein optisches Element (101, 151), welches erstes Licht und zweites Licht unterschiedlicher Lichtwellenlängen mit Brechungsindizes entsprechend den jeweiligen Wellenlängen beugt, um eine Position eines ersten Bilds des ersten Lichts und eine Position eines zweiten Bilds des zweiten Lichts zu verschieben;

ein lichtdurchlässiges Filter (103), welches eine erste Filterzone (111) aufweist, durch die nur das erste Licht hindurchgelassen wird, und eine zweite Filterzone (113) aufweist, durch das nur das zweite Licht hindurchgelassen wird;

einen Richtungssensor (17), der eine Mehrzahl von Pixel aufweist, welche sowohl das erste durch die erste Filterzone (111) hindurchgelassene Licht als auch das zweite durch die zweite Filterzone (113) durchgelassene Licht einer Pupillenteilung unterziehen und selektiv empfangen, wobei Pixel zum Empfangen des ersten Lichts und Pixel zum Empfangen des zweiten Lichts alternierend angeordnet sind; und

einen Bilderfassungsabschnitt (22), der das erste Bild und das zweite Bild von dem Richtungssensor erfasst, wobei das optische Element (101, 151) die Position des ersten Bilds und die Position des zweiten Bilds auf dem Richtungssensor (17) durch einen Mittenabstand der Pixel auf der Grundlage einer Differenz im Brechungsindex verschiebt, bedingt durch eine Differenz zwischen der Wellenlänge des ersten Lichts und der Wellenlänge des zweiten Lichts, das lichtdurchlässige Filter (103) sich im Inneren eines Abbildungsobjektivs (109) befindet, durch das hindurch das erste Licht und das zweite Licht gelangen, und das lichtdurchlässige Filter (103) zwischen einer ersten Linsengruppe (105) und einer zweiten Linsengruppe (107) des Abbildungsobjektivs (109) angeordnet ist, das sich zusammensetzt aus der ersten Linsengruppe (105) und der zweiten Linsengruppe (107).

2. Bildaufnahmevorrichtung (10) nach Anspruch 1, weiterhin umfassend einen Vergleicherabschnitt (45), der Ausgangswerte entsprechender Positionen zwischen dem ersten Bild und dem zweiten Bild vergleicht.

3. Bildaufnahmevorrichtung nach Anspruch 1 oder 2, bei der das optische Element (101, 151) ein Prisma oder ein planparalleles Glas ist.

4. Bildaufnahmevorrichtung (10) nach einem der Ansprüche 1 bis 3, bei der das erste Licht Licht in einem roten Wellenlängenbereich und das zweite Licht Licht in einem nahen Infrarot-Wellenlängenbereich ist.

5. Bildaufnahmevorrichtung (10) nach einem der Ansprüche 1 bis 4, bei der der Lichtungssensor Pixel zum Empfangen des ersten Lichts und Pixel zum Empfangen des zweiten Lichts aufweist, angeordnet in einem Schachbrettmuster.

6. Bildaufnahmevorrichtung (10) nach einem der Ansprüche 1 bis 4, bei der der Richtungssensor (17) eine Reihe von Pixel zum Empfangen des ersten Lichts und einer Reihe von Pixeln zum Empfangen des zweiten Lichts in alternierender Anordnung besitzt.

7. Bildaufnahmevorrichtung (10) nach einem der Ansprüche 1 bis 6,

bei der der Richtungssensor eine Rechteckform besitzt, und
wobei das optische Element (101, 151) die Position des ersten Bilds und die Position des zweiten Bilds in einer Richtung einer langen Seite des Rechtecks des Richtungssensors (17) oder in einer Richtung einer kurzen Seite des Rechtecks des Richtungssensors (17) verschiebt.

8. Bildaufnahmeverfahren, umfassend:

Verschieben einer Position eines ersten Bilds ersten Lichts und einer Position eines zweiten Bilds zweiten Lichts durch ein optisches Element (101, 151) durch Beugen des ersten Lichts und des zweiten Lichts voneinander verschiedener Lichtwellenlängen mit Brechungsindizes entsprechend den jeweiligen Wellenlängen;
Durchleiten des ersten Lichts und des zweiten Lichts durch ein lichtdurchlässiges Filter (103), welches eine erste Filterzone (11) aufweist, durch die hindurch nur das erste Licht hindurchgelassen wird, und eine zweite Filterzone (113) aufweist, durch die hindurch nur das zweite Licht hindurchgelangt, wobei das lichtdurchlässige Filter sich im Inneren eines Abbildungsobjektivs (105) befindet, durch das hindurch das erste Licht und das zweite Licht hindurchtreten, und angeordnet ist zwischen einer ersten Linsengruppe (105) und einer zweiten Linsengruppe (107) des Abbildungsobjektivs (109), das sich aus der ersten Linsengruppe (105) und der zweiten Linsengruppe (107) zusammensetzt; und
Empfangen des ersten Lichts und des zweiten Lichts durch einen Richtungssensor (17), der eine Mehrzahl von Pixeln aufweist, die sowohl das erste durch die erste Filterzone (111) hindurchgegangene Licht als auch das zweite durch die zweite Filterzone (113) hindurchgegangene Licht einer Pupillenteilung unterziehen und selektiv empfangen, wobei Pixel zum Empfangen des ersten Lichts und Pixel zum Empfangen des zweiten Lichts alternierend angeordnet sind; und
Erfassen des ersten Bilds und des zweiten Bilds von dem Richtungssensor (17),
wobei das Verschieben durch das optische Element (101, 151) erfolgt, wobei die Position des ersten Bilds und die Position des zweiten Bilds auf dem Richtungssensor (17) verschoben werden und einen Mittenabstand der Pixel auf der Grundlage einer Brechungsindexdifferenz, die auf einer Differenz zwischen der Wellenlänge des ersten Lichts und der Wellenlänge des zweiten Lichts beruht.

**Revendications**

1. Appareil d'imagerie (10), comprenant :

   un élément optique (101, 151), lequel réfracte une première lumière et une seconde lumière présentant des longueurs d'onde de lumière différentes l'une de l'autre avec des indices de réfraction correspondant aux longueurs d'onde respectives de manière à décaler une position d'une première image de la première lumière et une position d'une seconde image de la seconde lumière ;
   un filtre transmettant la lumière (103), lequel présente une première région de filtre (111) à travers laquelle seule la première lumière est transmise et une seconde région de filtre (113) à travers laquelle seule la seconde lumière est transmise ;
   un capteur directionnel (17), lequel présente une pluralité de pixels, lesquels réalisent une division pupillaire de chaque lumière, et reçoivent celle-ci de manière sélective, parmi la première lumière transmise à travers la première région de filtre (111) et la seconde lumière transmise à travers la seconde région de filtre (113), où des pixels pour recevoir la première lumière et des pixels pour recevoir la seconde lumière sont agencés de manière alternée, et
   une section d'acquisition d'image (22), laquelle acquiert la première image et la seconde image à partir du capteur directionnel (17),
   dans lequel l'élément optique (101, 151) décale la position de la première image et la position de la seconde image sur le capteur directionnel (17) à raison d'un pas des pixels sur la base d'une différence de l'indice de réfraction due à une différence entre la longueur d'onde de la première lumière et la longueur d'onde de la seconde lumière ; le filtre transmettant la lumière (103) est prévu dans une lentille d'imagerie (109) à travers laquelle la première lumière et la seconde lumière sont transmises, et le filtre transmettant la lumière (103) est prévu entre un premier groupe de lentilles (105) et un second groupe de lentilles (107) de la lentille d'imagerie (109), laquelle est composée du premier groupe de lentilles (105) et du second groupe de lentilles (107).

2. Appareil d'imagerie (10) selon la revendication 1, comprenant en outre une section de comparaison (45), laquelle compare des valeurs de sortie de positions correspondantes entre la première image et la seconde image.

3. Appareil d'imagerie selon la revendication 1 ou 2, dans lequel l'élément optique (101, 151) est un prisme ou un verre à plan parallèle.

4. Appareil d'imagerie (10) selon l'une quelconque des revendications 1 à 3, dans lequel la première lumière est une lumière d'une plage de longueurs d'onde du rouge, et la seconde lumière est une lumière d'une plage de longueurs d'onde du proche infrarouge.

5. Appareil d'imagerie (10) selon l'une quelconque des revendications 1 à 4, dans lequel le capteur directionnel présente des pixels pour recevoir la première lumière et des pixels pour recevoir la seconde lumière agencés suivant un motif d'échiquier.

6. Appareil d'imagerie (10) selon l'une quelconque des revendications 1 à 4, dans lequel le capteur directionnel (17) présente une rangée de pixels pour recevoir la première lumière et une rangée de pixels pour recevoir la seconde lumière agencés de manière alternée.

7. Appareil d'imagerie (10) selon l'une quelconque des revendications 1 à 6,

   dans lequel le capteur directionnel (17) présente une forme rectangulaire, et
   dans lequel l'élément optique (101, 151) décale la position de la première image et la position de la seconde image dans une direction d'un côté long du rectangle du capteur directionnel (17), ou dans une direction d'un côté court du rectangle du capteur directionnel (17).

8. Procédé d'imagerie, comprenant les étapes consistant à :

décaler une position d'une première image de la première lumière et une position d'une seconde image de la seconde lumière à travers un élément optique (101, 151) en réfractant la première lumière et la seconde lumière présentant des longueurs d'onde de lumière différentes l'une de l'autre avec des indices de réfraction correspondant aux longueurs d'onde respectives ;

transmettre la première lumière et la seconde lumière à travers un filtre transmettant la lumière (103), lequel présente une première région de filtre (111) à travers laquelle seule la première lumière est transmise, et une seconde région de filtre (113) à travers laquelle seule la seconde lumière est transmise, dans lequel le filtre transmettant la lumière est prévu dans un groupe de lentilles (105) à travers lequel la première lumière et la seconde lumière sont transmises, et est prévu entre un premier groupe de lentilles (105) et un second groupe de lentilles (107) de la lentille d'imagerie (109), laquelle est composée du premier groupe de lentilles (105) et du second groupe de lentilles (107), et

recevoir la première lumière et la seconde lumière à travers un capteur directionnel (17), lequel présente une pluralité de pixels, lesquels réalisent une division pupillaire de chaque lumière, et reçoivent celle-ci de manière sélective, parmi la première lumière transmise à travers la première région de filtre (111) et la seconde lumière transmise à travers la seconde région de filtre (113), où des pixels pour recevoir la première lumière et des pixels pour recevoir la seconde lumière sont agencés de manière alternée, et

acquérir la première image et la seconde image à partir du capteur directionnel (17),

dans lequel lors de l'étape pour décaler réalisée par le biais de l'élément optique (101, 151), la position de la première image et la position de la seconde image sur le capteur directionnel (17) sont décalées à raison d'un pas des pixels sur la base d'une différence de l'indice de réfraction due à une différence entre la longueur d'onde de la première lumière et la longueur d'onde de la seconde lumière.

# FIG. 1

FIG. 2

# FIG. 3

FIG. 4

EP 3 547 022 B1

FIG. 5

## FIG. 6

EP 3 547 022 B1

FIG.7

# FIG. 8

(A)

(B)

(C)

# FIG. 9

(A)

(B)

(C)

# FIG. 10

```
                    ┌─────────────┐
                    │    START    │
                    └──────┬──────┘
                           │
                           ▼
          ┌────────────────────────────────────┐
          │   SHIFT POSITION OF FIRST LIGHT AND │ ～S10
          │ POSITION OF SECOND LIGHT THROUGH PRISM │
          └────────────────┬───────────────────┘
                           │
                           ▼
          ┌────────────────────────────────────┐
          │ TRANSMIT FIRST LIGHT AND SECOND LIGHT │ ～S11
          │   THROUGH LIGHT TRANSMISSIVE FILTER │
          └────────────────┬───────────────────┘
                           │
                           ▼
          ┌────────────────────────────────────┐
          │  RECEIVE FIRST LIGHT AND SECOND LIGHT │ ～S12
          │        ON DIRECTIVITY SENSOR        │
          └────────────────┬───────────────────┘
                           │
                           ▼
          ┌────────────────────────────────────┐
          │  ACQUIRE FIRST IMAGE AND SECOND IMAGE │ ～S13
          └────────────────┬───────────────────┘
                           │
                           ▼
                    ┌─────────────┐
                    │     END     │
                    └─────────────┘
```

# FIG. 11

EP 3 547 022 B1

## FIG. 12

## FIG. 13

FIG. 14

EP 3 547 022 B1

**REFERENCES CITED IN THE DESCRIPTION**

**Patent documents cited in the description**

- WO 2013018471 A
- JP 2016090290 A
- US 2016123810 A1